# FASCICULE DE BREVET EUROPEEN

(11) **EP 2 225 490 B1**
(45) Date de publication et mention de la délivrance du brevet: **10.10.2018**
(21) Numéro de dépôt: 08854805.2
(22) Date de dépôt: 31.10.2008
(51) Int. Cl.: F23G 5/44, B65G 47/19, G01G 11/18

(54) **INSTALLATION D'EXTRACTION À DÉBIT RÉGULIER**
EXTRAKTIONSANLAGE MIT GLEICHMÄSSIGEM DURCHFLUSS
EXTRACTION PLANT WITH REGULAR FLOW

(30) Priorité: 28.11.2007 FR 0708304
(43) Date de publication de la demande: 08.09.2010
(73) Titulaire: Appalette Tourtellier Systèmes, 68059 Mulhouse Cedex (FR)
(72) Inventeur: RIEFFEL, Luc, F-68640 Muespach (FR); FAESCH, Gérard, F-68200 Mulhouse (FR)
(74) Mandataire: Hege, Frédéric
(86) Numéro de dépôt international: PCT/IB2008/002927
(87) Numéro de publication internationale: WO 2009/068946

(56) Documents cités:
- EP-A- 0 397 882
- EP-A- 0 495 399
- EP-A- 0 690 265
- DE-A1- 2 822 188
- JP-A- 59 039 616
- JP-A- 60 048 813
- JP-A- 60 262 713
- US-A- 5 129 505

## Description

### Domaine technique de l'invention

La présente invention se rapporte à une installation et à un procédé d'extraction, par exemple pour pneus usagés déchiquetés, déchets municipaux broyés grossièrement, déchets commerciaux, papiers, textiles, etc.

Elle se rapporte plus particulièrement à une installation et à un procédé d'extraction destiné à être utilisée pour l'alimentation d'un four, en particulier un four rotatif de type four de cimenterie ou four à chaux en combustibles alternatifs solides.

Les fours rotatifs visés sont ceux des cimenteries mais aussi de fabriques de chaux et tous les autres fours fonctionnant à haute température. Les fours de cimenterie fonctionnent avec une flamme d'un côté de la partie cylindrique, produisant les températures élevées nécessaires dans ce type de four, la matière première - calcaire, argile essentiellement - étant introduite du côté opposé. Ainsi, la matière première est réchauffée petit à petit à l'approche de la flamme et est transformée chimiquement à proximité de cette flamme en clinker, lequel peut, après refroidissement, être broyé et, avec certains additifs, former du ciment.

On peut ajouter des combustibles alternatifs aux combustibles classiques - charbon, pétrole, gaz - au niveau de cette flamme, mais comme on se situe à la sortie des produits transformés, il faut être certain que ces combustibles sont entièrement consumés avant de les adjoindre au clinker. Cela impose de n'utiliser que des produits fins dans cette zone. Une autre raison vient du fait que les combustibles envoyés dans la flamme doivent brûler avant de tomber sur la paroi du cylindre, sinon ils risquent de détériorer rapidement le revêtement réfractaire de ce cylindre. Les combustibles doivent donc comporter au moins une dimension très petite (comme des feuilles).

De plus en plus de fours sont équipés du côté de l'alimentation en matière première de tours dites « de préchauffage » dont la fonction est de faire profiter de la chaleur des gaz du four à la matière première qui arrive, en constituant une sorte d'échangeur de chaleur. Ainsi, la matière première arrive dans la partie cylindrique du four déjà chaude et la transformation chimique nécessite moins d'énergie. Cette tour de préchauffage peut être avantageusement remplacée par une tour de précalcination, où, en plus de l'échange de chaleur, on dispose de flammes complémentaires pour encore davantage préchauffer la matière et dans certains cas commencer la transformation chimique.

Dans ces tours, on peut ajouter à la matière première différents combustibles grossiers tels que les pneus déchiquetés ou plastiques broyés, et dans certains cas même des pneus entiers qui accompagnent la matière première et qui, grâce à la température élevée ainsi qu'à l'oxygène arrivant avec les gaz chauds, s'enflamment et ainsi contribuent à l'échauffement de la matière première.

Ces produits grossiers sont plus difficiles à extraire d'une masse stockée. Les moyens classiques de stockage - extraction formés d'un silo approvisionné par un élévateur, suivi d'un extracteur conventionnel, d'un doseur et d'un convoyeur, ne peuvent convenir en raison des phénomènes de voûtage, de bourrage et de sortie par paquets observés au niveau de l'extracteur.

### Etat de la technique

Par le document US4 645 065, une installation de stockage et d'alimentation d'un four pour pneus déchiquetés est connue. L'extraction se fait par des vis horizontales en fond de stock. Ce type de solutions présente l'inconvénient que le débit de sortie de l'extracteur est très difficile à fiabiliser et est sujet à des blocages et des irrégularités. Quand un tel débit arrive sur un doseur à bande, il est impossible de le réguler correctement. Un doseur à bande nécessite qu'on l'alimente avec un débit suffisamment régulier pour pouvoir produire un débit parfaitement régulier.

Les mêmes inconvénients sont observés dans le cas d'une cuve de stockage horizontale dont l'extraction s'effectue horizontalement par un tapis ou des vérins poussoirs. Le produit arrivant très irrégulièrement s'avère particulièrement difficile à doser.

On connaît par le document US5 129 505 une installation d'extraction de déchets papiers. Le produit à extraire est poussé vers l'extrémité avant par un convoyeur, et des disques disposés au-dessus du convoyeur forment un coin, dans lequel le produit s'engage. Un système de détection de niveau et de pilotage par marche/arrêt en fonction du niveau permet d'obtenir un flux gérable à la sortie, mais on n'obtient pas une régularité de flux satisfaisante.

Une installation de stockage et d'alimentation de déchets divers, allant du fin au grossier et aussi pneus entiers, est connue par le document EP 0 690 265 A. L'extraction est effectuée par un extracteur à tablier métallique incliné avec tambour écrêteur tournant dans le sens contraire du tablier.

Ces extracteurs résolvent une partie du problème décrit ci-dessus. En effet, on n'observe pas de blocages à la sortie de l'extracteur et le débit est plus régulier que dans les solutions classiques.

Ces extracteurs présentent néanmoins des inconvénients, et le débit dans les installations connues reste néanmoins trop irrégulier. On observe en effet que pour certains produits, l'écrêteur est peu efficace pour renvoyer l'excès de produit vers l'intérieur de la trémie. Ce débit irrégulier provoque la formation de monoxyde de carbone au niveau des gaz dégagés par le four.

### Exposé de l'invention

L'installation d'extraction de la présente invention remédie aux inconvénients rencontrés dans les installations de l'état de la technique. Elle comprend en effet une trémie permettant de stocker une certaine quantité de produit à extraire, un extracteur, permettant de pousser ledit produit vers l'extrémité avant dudit extracteur, un écrêteur situé dans la zone de l'extrémité avant de l'extracteur, au-dessus dudit extracteur, et tournant dans un sens permettant de renvoyer une partie dudit produit vers l'intérieur de ladite trémie. Elle est caractérisée en ce que ledit écrêteur comporte des moyens de poussée destinés à renforcer le renvoi d'une partie dudit produit vers l'intérieur de la trémie, les dits moyens de poussée étant obliques par rapport à la direction d'avancée du produit par l'effet de l'extracteur.

Selon un mode de réalisation avantageux de l'invention, ledit extracteur est un extracteur à tablier, de préférence métallique.

Selon une disposition avantageuse de l'invention, le tambour écrêteur a une forme de cylindre, et comprend des cornières, fixées sur son pourtour. Chaque cornière est fixée par une de ses ailes sur la surface du cylindre, alors que l'autre aile s'étend de préférence radialement vers l'extérieur du cylindre, formant lesdits moyens de poussée, en forme d'équerres ou ailettes. En effet un tambour lisse n'est parfois pas suffisant selon les produits à extraire.

Pour éviter que du produit ne passe par dessus l'écrêteur et ne vienne ajouter un flux de matière incontrôlé au flux contrôlé par l'ouverture constante entre le tablier et le tambour écrêteur, ces cornières sont repliées dans un sens qui les rende le moins agressives possibles, et donc elles forment un angle aigu avec la face du tambour qui les suit dans le mouvement, typiquement de l'ordre de 30 à 45°. Cette disposition donne satisfaction pour un certain nombre de produits.

Cependant, d'autres types de produit ont tendance à se coincer entre l'extracteur et l'écrêteur, et ces cornières mettent un certain temps - de l'ordre de la minute - à l'évacuer vers l'arrière. Le débit en est donc perturbé pendant tout ce temps.

Selon un mode de réalisation avantageux de l'invention, l'aile radiale de la cornière présente un angle supérieur ou égal à 90° avec la face du tambour qui les suit dans le mouvement. Il en résulte une meilleure régularité du flux extrait malgré le passage d'une partie du produit au-dessus de l'écrêteur. Cette disposition donne satisfaction pour certains types de produits.

Cependant, il existe des produits à extraire qui sont difficiles à manutentionner, comme par exemple des pneus déchiquetés grossièrement, et on observe alors des coups donnés par chaque cornière au produit, ces coups se transmettant à l'ensemble de la machine. En effet, les ailettes sont réparties de manière discontinue autour du tambour et donc exercent des efforts discontinus sur la masse du produit. Cette discontinuité se ressent par des vibrations sur la machine, ce qui réduit la durée de vie de celle-ci et perturbe la mesure de poids associée à la machine. Par ailleurs, les ailettes exercent des efforts sur le produit qui sont opposés aux efforts exercés par le tablier métallique, ce qui n'est pas optimal, ni en terme de perturbation de la masse de produit, ni en terme de consommation énergétique. La régularité du produit extrait n'est alors pas satisfaisante.

C'est pourquoi, selon l'invention, lesdits moyens de poussée sont obliques par rapport à la direction d'avancée du produit par l'effet du tablier de l'extracteur

Ces moyens sont avantageusement :
- des hélices montées sur l'écrêteur, afin de réaliser ladite poussée oblique de manière parfaitement continue, ou
- des cornières formant ailettes, montées obliques par rapport à l'axe de l'écrêteur, dans le but d'obtenir une réalisation plus simple tout en maintenant l'avantage de la présence des moyens de poussée obliques, ou
- une combinaison de ces deux moyens avec des cornières montées parallèles à l'axe de l'écrêteur.

Un tel mode de réalisation selon l'invention donne une grande régularité du débit sortant, avec une grande variété de produits à extraire.

Il arrive fréquemment que le produit présente une granulométrie élevée (de l'ordre de 500mm), une densité élevée (de l'ordre de 0,7 à 1) et que le débit souhaité soit relativement faible (inférieur à 1t/h). On comprend que dans ces conditions la vitesse du tablier doit être extrêmement faible, notamment parce que l'espace disponible entre le tablier et l'écrêteur doit permettre le passage des gros morceaux, et que la largeur de l'extracteur doit être proche de la largeur de la trémie, typiquement de 1,5 à 3m. Or dans les réalisations de l'état de la technique, la hauteur de passage est la même sur toute la longueur de l'écrêteur, ce qui donne une section de passage trop importante dans les conditions décrites ci-dessus. Pour cette raison, il est avantageux de réaliser un extracteur caractérisé en ce que l'ouverture entre le tablier de l'extracteur et l'écrêteur présente une variation en hauteur, de préférence la hauteur étant plus grande au centre qu'aux extrémités.

Selon un mode de réalisation particulièrement avantageux de l'invention, deux ou plusieurs hélices sont disposées sur l'écrêteur, les hélices poussant le produit à la fois vers l'intérieur de la trémie, et vers l'axe central de la machine, lesdites hélices étant disposées sur une partie de la longueur de l'écrêteur allant des extrémités jusqu'à une certaine distance du milieu dudit écrêteur, laissant la zone centrale de la section de passage sans hélice, et donc avec une plus grande hauteur de section de passage. On peut aussi équiper cette zone avec de petites cornières.

Pour certaines installations, le risque d'explosion doit être pris en compte. Il faut alors choisir des composants qui ne risquent pas de provoquer d'étincelle, et disposer l'installation de telle sorte que les conséquences d'une explosion restent malgré tout maitrisés. C'est pourquoi une réalisation préférée de l'invention est une installation d'extraction construite selon des normes permettant qu'elle soit protégée contre les risques d'explosion.

La présente invention concerne également un procédé d'extraction, par exemple pour pneus usagés déchiquetés, déchets municipaux broyés grossièrement, déchets commerciaux, papiers, textiles, etc. comprenant les étapes suivantes :
- Introduction d'une certaine quantité de produit à extraire dans une trémie,
- Poussée dudit produit par un extracteur vers l'extrémité avant dudit extracteur, et renvoi vers l'intérieur de ladite trémie d'une partie dudit produit à l'aide d'un écrêteur situé dans la zone de l'extrémité avant de l'extracteur, au-dessus dudit extracteur.

La méthode est remarquable en ce que ledit écrêteur comporte des moyens de poussée destinés à renforcer le renvoi d'une partie dudit produit vers l'intérieur de la trémie, les moyens de poussée étant obliques par rapport à la direction d'avancée du produit par l'effet de l'extracteur.

Une variante ne faisant pas partie de l'invention concerne également un procédé de dosage d'un débit de déchets, par exemple en pneus usagés déchiquetés ou déchets municipaux broyés grossièrement déchets commerciaux, papiers, textiles, etc. pour la mise en oeuvre d'une installation comme décrite ci-dessus comportant les étapes suivantes :
- Pesée de l'extracteur
- Enregistrement en continu du poids
- Calcul du débit sortant à l'aide de l'enregistrement de ce poids
- Comparaison de ce débit à un débit de consigne
- Pilotage de la vitesse du tablier en fonction du résultat de ladite comparaison, par l'intermédiaire de variateurs de fréquence

En effet, pour les applications selon l'état de la technique, quand un dosage est nécessaire, on dispose en aval de l'extracteur un doseur à bande dont la fonction est de contrôler le débit sortant et de piloter la vitesse du tablier de l'extracteur. Ce doseur à bande jette lui-même le produit sur un transporteur chargé d'acheminer le produit vers le point d'alimentation du four. Ce doseur à bande nécessite une certaine place, et une certaine hauteur dans le circuit de la matière. La suppression de ce doseur à bande permet de gagner de l'ordre de 1 à 2 mètres de hauteur dans l'installation. L'invention, en permettant de délivrer un flux beaucoup plus constant à la sortie de l'extracteur, permet de réaliser une installation dans laquelle l'extracteur est pesé et le poids obtenu en continu permet de contrôler le débit sortant et de piloter la vitesse du tablier de l'extracteur pour doser le débit sortant.

L'ensemble extracteur, écrêteur et trémie est alors monté sur plusieurs pesons, dont le signal est enregistré en continu dans un système électronique, permettant d'en faire le total et de calculer le poids « perdu » par ledit ensemble en comparant son poids à un instant donné à son poids un certain temps plus tôt. Ce poids « perdu » rapporté au temps correspondant donne une mesure du débit sortant de l'extracteur. On peut alors comparer ce débit avec le débit de consigne, qui est le débit souhaité par l'utilisateur de l'installation. Si le débit ainsi mesuré est plus faible que le débit de consigne, on donnera un ordre d'augmentation de la vitesse d'avancée du tablier métallique, par l'intermédiaire d'un variateur de fréquence relié au moteur de l'extracteur dans ce but. Si le débit ainsi mesuré est plus élevé que le débit de consigne, on donnera un ordre de diminution de la vitesse d'avancée du tablier métallique par l'intermédiaire du même variateur de fréquence. Ces ordres de faire varier la vitesse du tablier métallique sont bien entendu soumis à un traitement adapté à ce type de machine, permettant d'éviter les variations trop brutales de la vitesse, et garantir ainsi la stabilité du système.

### Brève description des dessins

D'autres avantages apparaîtront à la lecture de la description suivante d'un mode de réalisation de l'invention effectuée à titre d'exemple uniquement, en référence aux dessins accompagnants dans lesquels :
- La figure 1 est une vue schématique d'ensemble en perspective d'une installation comprenant une installation d'extraction selon un mode de réalisation avantageux de l'invention,

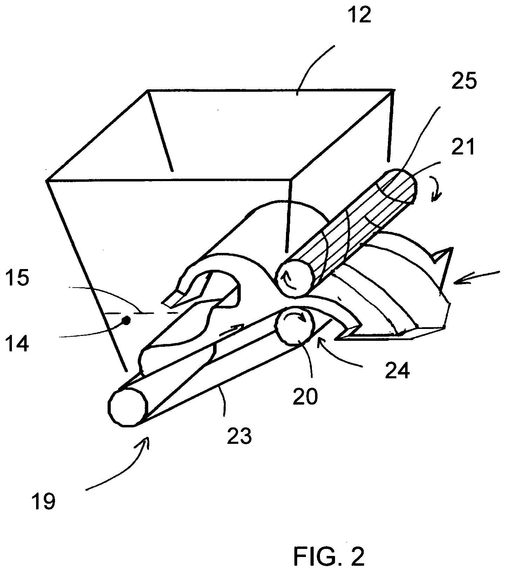

- La figure 2 est une vue schématique d'une trémie, d'un extracteur à tablier et d'un tambour écrêteur d'une installation d'extraction selon un mode de réalisation avantageux de l'invention,
- La figure 3 représente un détail d'un tambour écrêteur équipé d'hélices (4 sur la figure), combiné à de petites cornières longitudinales.

### Description détaillée d'un mode de réalisation de l'invention

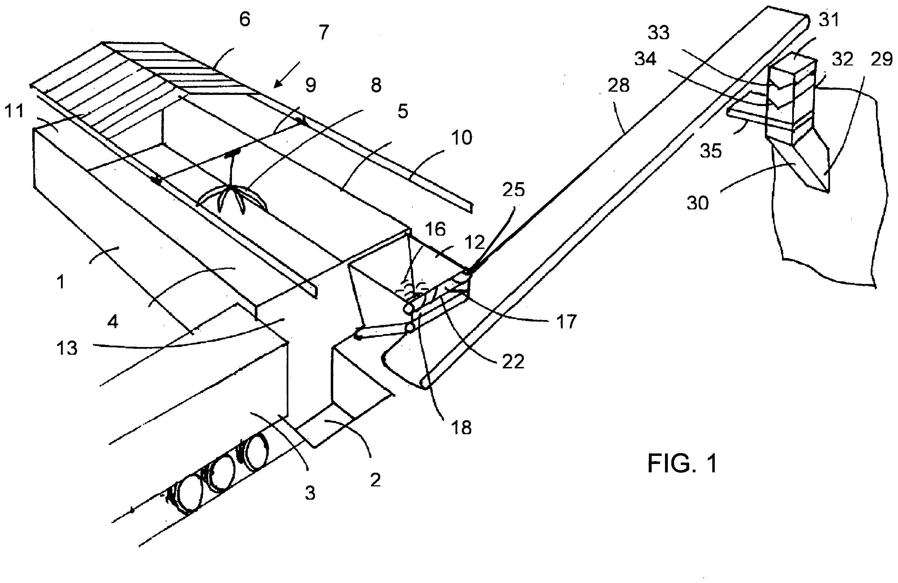

L'installation représentée à la fig. 1 débute par une réserve principale de déchets 1, abritée, constituée d'une fosse de déchargement 2 où un camion 3 peut décharger son contenu de déchets et d'une zone de stockage 4 où les déchets peuvent être stockés en attendant leur utilisation dans la suite de l'installation, protégée par des murs tels que 5 et une couverture 6 formant un bâtiment 7.

Une variante de l'installation consiste à réaliser cette réserve 1 de plein pied.

Une autre variante de l'installation consiste à réaliser cette réserve en plein air.

Au-dessus de ce volume se déplace un moyen d'amenée, par exemple un pont roulant automatique 9 à grappin 8, transférant les déchets de cette réserve principale à une réserve tampon, ou trémie 12.

Le pont roulant est constitué d'une poutre roulante, qui se déplace le long de deux rails placés des deux côtés les plus longs du bâtiment, en haut de ce bâtiment. Sur cette poutre roulante se déplace un chariot équipé d'un treuil, dont le câble supporte un grappin. Les différents mouvements horizontaux et verticaux sont assurés par des moteurs électriques embarqués, dont l'alimentation depuis une armoire fixe dans le bâtiment est assurée par l'intermédiaire de deux guirlandes, l'une d'un point fixe vers la poutre roulante, l'autre de la poutre roulante vers le chariot. Ces guirlandes permettent de déplacer toujours le bout des câbles électriques avec le chariot, respectivement la poutre roulante.

Le grappin est un organe de préhension des déchets sous forme de pince métallique, actionné par des vérins hydrauliques. Le moteur hydraulique est installé sur le grappin même afin de réduire au minimum les longueurs de tuyaux hydrauliques nécessaires. Il est relié électriquement à une alimentation fixe au niveau du pont roulant par l'intermédiaire d'un enrouleur, afin d'ajuster constamment la longueur du câble électrique à celle du câble qui porte le grappin, et d'assurer ainsi l'alimentation électrique du moteur hydraulique du grappin en toute position dudit grappin.

Ce mode d'alimentation de la trémie est un exemple fréquemment utilisé, mais on peut aussi alimenter la trémie par d'autres moyens, comme par exemple directement par chargeuse frontale, qui prend du produit d'un stock disposé à même le sol à proximité de l'installation, et qui alimente la trémie chaque fois que l'installation le nécessite.

Les déchets sont ensuite évacués en quantités dosées à l'aide d'un extracteur à tablier 20 combiné à un écrêteur 21 tournant en sens inverse pour renvoyer le surplus de produit vers l'intérieur de la trémie 12 et ainsi éviter des blocages. Le grappin circule le long de deux rails supérieurs 10 entre une extrémité 11 de la réserve et la trémie 12 disposée au voisinage de l'autre extrémité 13 de la réserve principale 1.

Les mouvements de ce grappin 8 sont commandés par un automate en liaison avec un détecteur 14, qui peut aussi être remplacé par des pesons sous l'extracteur, de niveau bas ou haut et bas du volume présent dans la trémie 12 de manière à la remplir partiellement en occupant un volume minimal 15 par les morceaux 16 de déchets provenant du grappin 8.

A cet effet, le volume de prise du grappin 8 est choisi de façon à ne présenter qu'une petite fraction du volume total de stockage de la trémie 12.

La trémie en forme de pyramide renversée présente une sortie latérale 17 sous la forme d'une ouverture 18, équipée d'un dispositif évacuateur 19 formé d'un extracteur 20 à tablier métallique coopérant avec un tambour écrêteur 21.

Le tambour écrêteur 21 est disposé en partie supérieure de l'ouverture de sortie de préférence à un emplacement tel qu'il constitue son bord supérieur 22. Il tourne dans le sens lui permettant de renvoyer vers l'intérieur de la trémie une partie des produits, comme indiqué par les flèches.

L'extracteur 20 à tablier est incliné à au moins 30° par rapport au plan de sortie des produits.

Il est formé d'un tambour amont et d'un tambour aval entre lesquels circule un tablier 23.

L'extrémité avant 24 est située sensiblement à la verticale du tambour écrêteur 21.

Le sens de rotation du tambour écrêteur 21 et l'avance de l'extracteur 20 sont contraires comme indiqué par les flèches. Ainsi, le tambour écrêteur 21 tourne dans le sens contraire de la sortie des produits, c'est-à-dire travaille à refouler les produits vers l'intérieur de la trémie 12 comme un organe de rabattement alors que l'extracteur 20 emporte ces mêmes produits en les évacuant par son extrémité avant 24. De plus le tambour écrêteur 21 est équipé d'hélices 25 permettant non seulement de refouler les produits vers l'intérieur de la trémie 12, mais en plus de les ramener vers l'axe central de l'extracteur 20, en laissant une zone centrale 26 sans hélice à proximité de cet axe, équipée de petites cornières 27 permettant ainsi de créer une zone avec une hauteur importante entre le tablier 23 et l'écrêteur 21, tout en gardant une section de sortie globale réduite (voir la flèche matérialisant la sortie du produit), permettant ainsi une vitesse de tablier 23 suffisamment élevée pour un débit donné.

Cette association de moyens travaillant de cette façon procure toute satisfaction en ce qui concerne la sortie régulière des déchets, même lorsqu'ils se trouvent dans un état de forte imbrication, et même pour des débits très faibles, inférieurs à 1t/h.

Les produits peuvent ainsi sortir de la trémie 12 par l'ouverture 18 à une vitesse contrôlée voisine de celle de l'extracteur 20 car, grâce au tambour écrêteur 21, on introduit une force dynamique de refoulement qui empêche le bourrage et repousse vers l'arrière de la trémie 12 les déchets en trop présents à la sortie. Ceux-ci sont déplacés ou ramenés dans la couche d'évacuation naturelle qui s'avance en nappe par glissement vers la sortie.

C'est le rôle du tambour écrêteur 21 qui débarrasse la sortie de toute surcharge de produits occasionnant un bourrage.

L'extracteur 20 à tablier 23 est avantageusement sur pesons, l'enregistrement du poids permettant de calculer le débit sortant, et de le doser en régulant la vitesse de l'extracteur 20 en fonction du débit, de manière à acheminer vers le four un flux continu à débit constant de déchets.

Ce débit est souhaité le plus constant possible pour des raisons d'homogénéité de la production et de qualité du produit final.

On trouve, dans l'état de la technique, l'utilisation d'un doseur à bande implanté après l'extracteur 20. Cela fonctionne bien sûr également et est également couvert par la présente invention. Mais l'invention permet de fonctionner sans doseur à bande, ce qui permet de gagner de la place et de la hauteur d'implantation, et on effectue alors le dosage directement en se servant de la mesure en continu du poids de produit contenu dans la trémie 12. La perte de poids donne une mesure précise du débit sortant.

Les déchets sont ensuite repris et acheminés par un transporteur incliné 28 vers une entrée auxiliaire d'un four. Le transporteur 28 est de préférence à bande lisse, pour conserver un maximum de flexibilité par rapport à la nature des produits utilisés. Ils sont admis dans le four par un entrée auxiliaire 29 qui communique par une cheminée 30 d'alimentation secondaire avec une entrée supérieure 31, entrée dans laquelle est engagée l'extrémité du ou de l'un des transporteurs d'acheminement 28.

La cheminée d'alimentation 30 comporte un volume de sécurité sous la forme d'un sas 32 d'isolation et de dépression à zones d'entrée et de sortie séparées par deux clapets pendulaires 33 et 34 en raison de la haute température régnant dans le four. Elle comporte également une guillotine de sécurité 35.

Une variante de l'invention consiste à construire l'installation selon des normes permettant qu'elle soit protégée contre les risques d'explosion. En effet les déchets utilisés dans ces installations peuvent présenter des risques explosifs.

On examinera maintenant de manière plus détaillée le fonctionnement de l'ensemble extracteur, trémie, écrêteur.

Le produit est stocké par petites quantités dans la trémie 12, reposant sur le tablier 23 de l'extracteur 20, lequel, par son mouvement, pousse le produit vers l'ouverture 18. A cette ouverture, un écrêteur 21 en forme de tambour rotatif repousse l'excès de produit vers l'intérieur de la trémie 12, dans le but d'éviter un coincement du produit dans la sortie, ainsi que pour assurer une épaisseur constante à la veine de produit sortante.

Dans le but de rendre plus efficace le travail de cet écrêteur, on l'a muni de cornières formant ailettes fixées sur le pourtour de l'écrêteur.

Selon l'invention ces cornières sont obliques par rapport à la direction d'avancée du produit par l'effet de l'extracteur et repoussent le produit non seulement vers l'intérieur de la trémie, mais également latéralement en direction de l'axe central de l'extracteur. Ces cornières sont donc également obliques par rapport à l'axe de l'écrêteur 21.

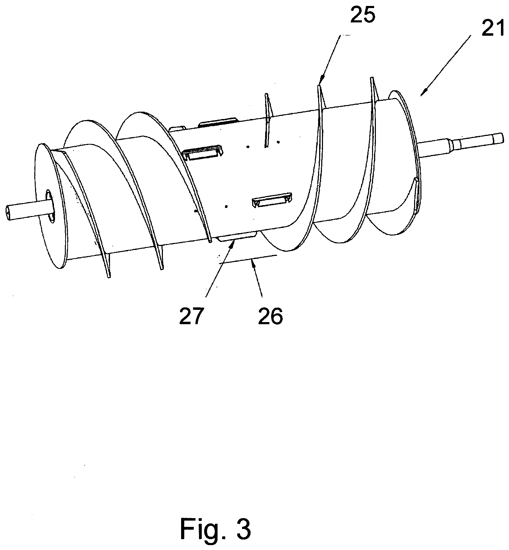

La fig. 3 montre un exemple d'un mode de réalisation avantageux selon l'invention : on a monté sur l'écrêteur 21 une ou plusieurs hélices 25 (quatre sur le cas représenté). De cette manière, le tambour écrêteur 21 pousse le produit vers le côté et vers l'intérieur, alors que le tablier 23 de l'extracteur 20 le pousse vers l'avant. Ainsi on réduit nettement les perturbations et on obtient un débit de sortie extrêmement régulier, pour une grande variété de produits à extraire.

Le fonctionnement de l'installation de stockage et d'alimentation d'un four rotatif selon un mode de réalisation avantageux de l'invention, comprenant au moins une réserve principale 1, un moyen d'amenée 8 est le suivant : transfert des déchets de cette réserve principale à au moins une réserve tampon 12, de cette dernière, les déchets sont évacués en quantités dosées à l'aide d'un extracteur 20 à tablier 23 combiné à un écrêteur 21 tournant en sens inverse pour renvoyer le surplus de produit vers l'intérieur de la trémie 12. Ainsi, des blocages sont évités. Puis les déchets sont repris et acheminés par un transporteur incliné 28 vers une entrée auxiliaire 29 d'un four. L'écrêteur 21 est équipé de moyens de poussée oblique 25, lesdits moyens exerçant une force oblique par rapport à la direction d'avancée du produit par l'effet du tablier 23 de l'extracteur 20. Ladite force s'exerce sur le surplus de produit arrivant à proximité de l'écrêteur 21 par l'effet de l'action du tablier 23 de l'extracteur 20.

L'installation est utilisée pour l'alimentation de cimenterie en déchets, notamment les déchets ou produit étant des pneus usagés entiers ou déchiquetés, déchets municipaux broyés grossièrement, déchets commerciaux, papiers, textiles, etc. Elle peut aussi être utilisée pour l'alimentation d'autres types de fours, ou pour tout besoin d'un débit régulier d'un produit en vrac, notamment à grosse granulométrie.

Bien que l'invention ait été décrite en liaison avec des structures particulières, elle n'y est nullement limitée et on peut y apporter de nombreuses variantes.

Les combinaisons des différentes réalisations représentées sur les dessins ou décrites ci-dessus ne sortent pas du cadre de l'invention.

Les signes de référence insérés après les caractéristiques techniques mentionnées dans les revendications ont pour seul but de faciliter la compréhension de ces dernières et n'en limitent aucunement la portée.

### Signes de référence :

- 1.: réserve principale de déchets
- 2.: fosse de déchargement
- 3.: camion
- 4.: zone de stockage
- 5.: murs
- 6.: couverture
- 7.: bâtiment
- 8.: grappin
- 9.: pont roulant
- 10.: rails supérieurs
- 11.: extrémité de la réserve
- 12.: trémie
- 13.: autre extrémité de la réserve
- 14.: détecteur
- 15.: volume de déchets dans la trémie
- 16.: morceaux de déchets
- 17.: sortie latérale de la trémie
- 18.: ouverture
- 19.: dispositif évacuateur
- 20.: extracteur
- 21.: écrêteur
- 22.: bord supérieur de l'ouverture
- 23.: tablier de l'extracteur
- 24.: extrémité avant du tablier
- 25.: hélices
- 26.: zone centrale de l'écrêteur
- 27.: cornières, aussi appelées équerres, ou ailettes
- 28.: transporteur incliné
- 29.: entrée auxiliaire vers le four
- 30.: cheminée d'alimentation auxiliaire
- 31.: entrée supérieure
- 32.: sas d'isolation
- 33.: clapet pendulaire supérieur
- 34.: clapet pendulaire inférieur
- 35.: guillotine de sécurité

## Revendications

1. Installation d'extraction, par exemple pour pneus usagés déchiquetés, déchets municipaux broyés grossièrement, déchets commerciaux, papiers, textiles, comprenant une trémie (12) permettant de stocker une certaine quantité de produit à extraire, un extracteur (20), permettant de pousser ledit produit vers une extrémité (24) dudit extracteur (20), un écrêteur (21) situé dans la zone de ladite extrémité (24) de l'extracteur, au-dessus dudit extracteur (20), et tournant dans un sens permettant de renvoyer une partie dudit produit vers l'intérieur de ladite trémie (12), ledit écrêteur (21) comportant des moyens de poussée destinés à renforcer le renvoi d'une partie dudit produit vers l'intérieur de la trémie (12), **caractérisée en ce que** lesdits moyens de poussée sont obliques par rapport à la direction d'avancée du produit par l'effet de l'extracteur (20).

2. Installation selon la revendication précédente, dans laquelle ledit extracteur (20) est un extracteur à tablier (23), de préférence métallique.

3. Installation selon l'une des revendications précédentes, dans laquelle ledit écrêteur (21) présente une forme globalement cylindrique, sur la surface duquel sont attachées par une de leurs ailes des cornières, l'autre de leurs ailes s'étendant radialement pour former lesdits moyens de poussée.

4. Installation selon l'une des revendications précédentes, dans laquelle lesdits moyens de poussée oblique sont des hélices (25).

5. Installation selon l'une des revendications précédentes, dans laquelle l'ouverture (18) permettant le passage du produit entre l'extracteur (20) et l'écrêteur (21) présente une variation en hauteur.

6. Installation selon la revendication précédente dans laquelle la hauteur de ladite ouverture (18) est plus grande en son centre qu'à ses extrémités.

7. Installation selon l'une des revendications précédentes, dans laquelle lesdits moyens de poussée oblique (25) sont disposés sur une partie de la longueur de l'écrêteur (21) allant des extrémités jusqu'à une certaine distance du milieu dudit écrêteur (21), ménageant ainsi une plus grande hauteur d'ouverture (18) dans la zone centrale (26) de ladite ouverture (18).

8. Installation selon la revendication précédente, dans laquelle de petites cornières (27) sont disposées dans ladite zone centrale (26).

9. Procédé d'extraction, par exemple pour pneus usagés déchiquetés, déchets municipaux broyés grossièrement, déchets commerciaux, papiers, textiles, comprenant les étapes suivantes :
• introduction d'une certaine quantité de produit à extraire dans une trémie (12),
• poussée dudit produit par un extracteur (20) vers une extrémité (24) dudit extracteur (20), et renvoi vers l'intérieur de ladite trémie (12) d'une partie dudit produit à l'aide d'un écrêteur (21) situé dans la zone de ladite extrémité (24) de l'extracteur (20), au-dessus dudit extracteur (20),
**caractérisé en ce que** ledit écrêteur (21) comporte des moyens de poussée destinés à renforcer le renvoi dudit produit vers l'intérieur de la trémie (12), lesdits moyens de poussée étant obliques par rapport à la direction d'avancée du produit par l'effet de l'extracteur (20).

10. Procédé d'extraction selon la revendication précédente, comprenant les étapes suivantes :
• pesée de l'ensemble extracteur (20), écrêteur (21) et trémie (12),
• enregistrement en continu du poids obtenu,
• calcul du débit sortant à l'aide de l'enregistrement de ce poids,
• comparaison de ce débit à un débit de consigne,
• pilotage de la vitesse du tablier (23) en fonction du résultat de ladite comparaison par l'intermédiaire de variateurs de fréquence.

## Patentansprüche

1. Extraktionsanlage, z.B. für zerkleinerte Altreifen, grob zerkleinerte Siedlungsabfälle, Gewerbeabfälle, Papier, Textilien, mit einem Trichter (12) zum Lagern einer bestimmten Menge des zu extrahierenden Produktes, einem Extraktor (20) zum Schieben des Produktes zu einem Ende (24) des Extraktors (20), einem im Bereich des Endes (24) des Extraktors angeordneten Begrenzer (21), über dem Extraktor (20) und Drehend in eine Richtung, die es erlaubt, einen Teil des Produkts in das Innere des Trichters (12) zurückzuführen, wobei der Begrenzer (21) Schubmittel aufweist, die dazu bestimmt sind, die Rückführung eines Teils des Produkts in das Innere des Behälters (12) zu verstärken, **dadurch gekennzeichnet, dass** die Schubmittel in Bezug auf die Vorwärtsrichtung des Produkts durch die Wirkung des Extraktors (20) schräg sind.

2. Anlage nach dem vorstehenden Anspruch, wobei der Extraktor (20) ein Plattenbandextraktor (23), vorzugsweise aus Metall, ist.

3. Anlage nach einem der vorstehenden Ansprüche, wobei der Begrenzer (21) eine im allgemeinen zylindrische Form aufweist, an dessen Oberfläche mittels einen seiner Flügel, Winkelstücke befestigt sind, wobei der andere seiner Flügel sich radial erstreckt, um die vorgenannte Schubmittel zu bilden.

4. Anlage nach einem der vorstehenden Ansprüche, wobei die schrägen Schubmittel Wendel (25) sind.

5. Anlage nach einem der vorstehenden Ansprüche, wobei die Öffnung (18), die den Durchgang des Produktes zwischen dem Extraktor (20) und dem Begrenzer (21) ermöglicht, eine Höhenänderung aufweist.

6. Anlage nach dem vorstehenden Anspruch, wobei die Höhe der Öffnung (18) in ihrer Mitte größer ist als an ihren Enden.

7. Anlage nach einem der vorstehenden Ansprüche, wobei die schrägen Schubmittel (25) über einen Teil der Länge des Begrenzers (21) angeordnet sind, der sich von den Enden bis zu einem Abstand von der Mitte des Begrenzers (21) erstreckt, wodurch eine größere Öffnungshöhe (18) im mittleren Bereich (26) der Öffnung (18) ermöglicht wird.

8. Anlage nach dem vorstehenden Anspruch, wobei kleine Winkel (27) in der Mittelzone (26) angeordnet sind.

9. Extraktionsverfahren, z.B. für zerkleinerte Altreifen, grob zerkleinerte Siedlungsabfälle, Gewerbeabfälle, Papier, Textilien, bestehend aus folgenden Schritten :
- Einbringen einer bestimmten Menge des zu extrahierenden Produkts in einen Trichter (12),
- schieben des Produkts durch einen Extraktor (20) zu einem Ende (24) des Extraktors (20) und zurückführung von einem Teil des Produkts zum Inneren des Trichters (12), mittels eines Begrenzers (21), der sich in der Zone des Endes (24) des Extraktors (20) oberhalb des Extraktors (20) befindet, **dadurch gekennzeichnet, dass** der Begrenzer (21) Schubmittel umfasst, die dazu bestimmt sind, die Rückführung des Produkts zum Inneren des Behälters (12) zu verstärken, wobei die Schubmittel in Bezug auf die Vorschubrichtung des Produkts durch die Wirkung des Extraktors (20) schräg sind.

10. Extraktionsverfahren, nach dem vorstehenden Anspruch, umfassend die folgenden Schritte :
- Wiegen von zusammen Extraktor (20), Begrenzer (21) und Trichter (12),
- Kontinuierliche Aufzeichnung des gemessenen Gewichts,
- Berechnung der Durchflussmenge über die Erfassung dieses Gewichtes,
- Vergleich dieser Durchflussmenge mit einer eingestellten Durchflussmenge,
- Steuerung der Geschwindigkeit des Plattenbandes (23) in Abhängigkeit vom Ergebnis des Vergleichs mit Hilfe von Frequenzreglern.

## Claims

1. Extraction installation, for example for shredded used tyres, coarsely ground municipal waste, commercial waste, paper, textiles, comprising a hopper (12) for storing a certain quantity of product to be extracted, an extractor (20) for pushing said product towards one end (24) of said extractor (20), a calibrator (21) located in the area of said end (24) of the extractor, above said extractor (20), and rotating in a direction adapted for sending a portion of said product towards back into said hopper (12), said calibrator (21) comprising pushing means intended to reinforce the sending of a portion of said product back into the hopper (12), **characterized in that** said pushing means are oblique with respect to the moving direction of the product by the effect of the extractor (20).

2. Installation according to the previous claim, wherein said extractor (20) is an apron extractor (23), preferably a metallic apron extractor.

3. Installation according to one of the previous claims, wherein said calibrator (21) has a substantially cylindrical shape, on the surface of which corner irons are attached by one of their blades, the other of their blades extending radially to form said pushing means.

4. Installation according to one of the previous claims, wherein said oblique pushing means are helicoids (25).

5. Installation according to one of the previous claims, wherein the opening (18) allowing the passage of the product between the extractor (20) and the calibrator (21) presents a variation in height.

6. Installation according to the previous claim in which the height of said opening (18) is greater in its center than at its ends.

7. Installation according to one of the previous claims, wherein said oblique pushing means (25) are disposed over a portion of the length of the calibrator (21) extending from the ends to a given distance from the center of said calibrator (21), thereby allowing a greater opening height (18) in the central area (26) of said opening (18).

8. Installation according to the previous claim, in which small corner irons (27) are arranged in said central area (26).

9. Extraction method, for example for shredded used tyres, coarsely ground municipal waste, commercial waste, paper, textiles, comprising the following steps :
- introduction of a certain quantity of product to be extracted into a hopper (12),
- pushing of said product by an extractor (20) towards an end (24) of said extractor (20), and return of a part of said product back into said hopper (12) by means of a calibrator (21) located in the area of said end (24) of the extractor (20), above said extractor (20),
**characterized in that** said calibrator (21) comprises pushing means intended to reinforce the return of said product back into the hopper (12), said pushing means being oblique with respect to the moving direction of the product by the effect of the extractor (20).

10. Extraction method according to the previous claim, comprising the following steps :
- weighing of together the extractor (20), calibrator (21) and hopper (12),
- continuous recording of the measured weight,
- calculation of the outgoing flow using the record of this weight,
- comparison of this flow with a set point,
- control of the speed of the apron extractor (23) according to the result of said comparison by means of frequency variators.
